# EUROPEAN PATENT APPLICATION

(11) **EP 1 271 032 A1**
(43) Date of publication of application: **02.01.2003**
(21) Application number: 02012886.4
(22) Date of filing: 11.06.2002
(51) Int. Cl.: F16L 11/10

(54) **Flexible and resiliently extensible coiled tube and method therefor**

(30) Priority: 20.06.2001 IT MI20011301
(71) Applicant: Tamborini, Ariberto, I-21020 Daverio (Varese) (IT); Tamborini, Giancarlo, I-21020 Daverio (Varese) (IT)
(72) Inventor: Tamborini, Ariberto, I-21020 Daverio (Varese) (IT); Tamborini, Giancarlo, I-21020 Daverio (Varese) (IT)
(74) Representative: Cicogna, Franco

(57) **Abstract**

The present invention relates to a flexible and resiliently extensible coiled tube (1), comprising a plastics material tubular element (2) with a reinforcement element embedded therein, said reinforced element comprising a coiled metal wire (3). The tubular element (1) assumes a spiral configuration, adapted to allow the coiled tube (1) to be resiliently elongated.

## Description

### BACKGROUND OF THE INVENTION

The present invention relates to a flexible and resiliently extensible coiled tube and a method for making said coiled tube.

Prior coiled tubes for shower application conventionally comprise a tube element, made of a metal or plastic material, having a variable length depending on applications.

Said prior tubes have a comparatively large size, which hinders the employment of the tube in shower cabinets having a small size.

Moreover, prior shower tubes are moreover affected by the problem that, if the shower body would detach from its supporting attachment, then it would abruptly impact against the shower bottom or tub, with possible damages to these elements.

### SUMMARY OF THE INVENTION

Accordingly, the aim of the present invention is to overcome the above mentioned drawbacks, by providing a flexible and resiliently extensible coiled tube or hoses, and a method for making it, allowing to provide a coiled tube or hose having a very reduced size and with a useful length adapted to be extended to seven times the starting length of the tube.

Within the scope of the above mentioned aim, a main object of the present invention is to provide such a coiled tube allowing to leave the shower element in an attached condition, while preventing damages to the components of the shower cabinet.

Another object of the present invention is to provide such a coiled tube which, owing to its specifically designed constructional features, is very reliable and safe in operation.

Yet another object of the present invention is to provide such a flexible and resiliently extensible coiled tube which can be easily made starting from easily available elements and materials, and which, moreover, is very competitive from a mere economic standpoint.

According to one aspect of the present invention, the above mentioned aim and objects, as well as yet other objects, which will become more apparent hereinafter, are achieved by a flexible and resiliently extensible coiled tube, characterized in that said tube comprises a plastics material tubular element in which is embedded a reinforcement element comprising a coiled metal wire, and that said tubular element is adapted to assume a spiral configuration for allowing said coiled tube to be resiliently elongated.

### BRIEF DESCRIPTION OF THE DRAWINGS

Further characteristics and advantages of the present invention will become more apparent hereinafter from the following detailed disclosure of the preferred, though not exclusive, embodiment of a flexible and resiliently extensible coiled tube, which is illustrated, by way of an indicative, but not limitative, example, in the accompanying drawings, where:
Figure 1 is a schematic view illustrating the coiled tube according to the present invention, applied to a shower nozzle;
Figure 2 is a further schematic view of the soiled tube according to the present invention with its end fitting, represented in exploded form;
Figure 3 illustrates the tubular element, preferably made of a polyurethane or nylon material, made by an extruding process;
Figure 4 illustrated a winding operation for winding the spiraled metal wire on said tubular element;
Figure 5 illustrates the coil tube according to the present invention, including a metal spiral arrangement, after having applied to it a further coating plastic element, coating the metal spiral arrangement and first tube; and
Figure 6 shows a further operating step in which, upon having cut to a desired size the tube, it is wound on a mandrel for providing the tube with an end spiral or coil configuration.

### DESCRIPTION OF THE PREFERRED EMBODIMENT

With reference to the number references of the above mentioned figures, the flexible and resiliently extensible coil tube according to the present invention, which has been generally indicated by the reference number 1, is advantageously made of a tubular element 2, made of any desired plastics material, such as, preferably, nylon or other thermoforming material, such as polyurethane or the like.

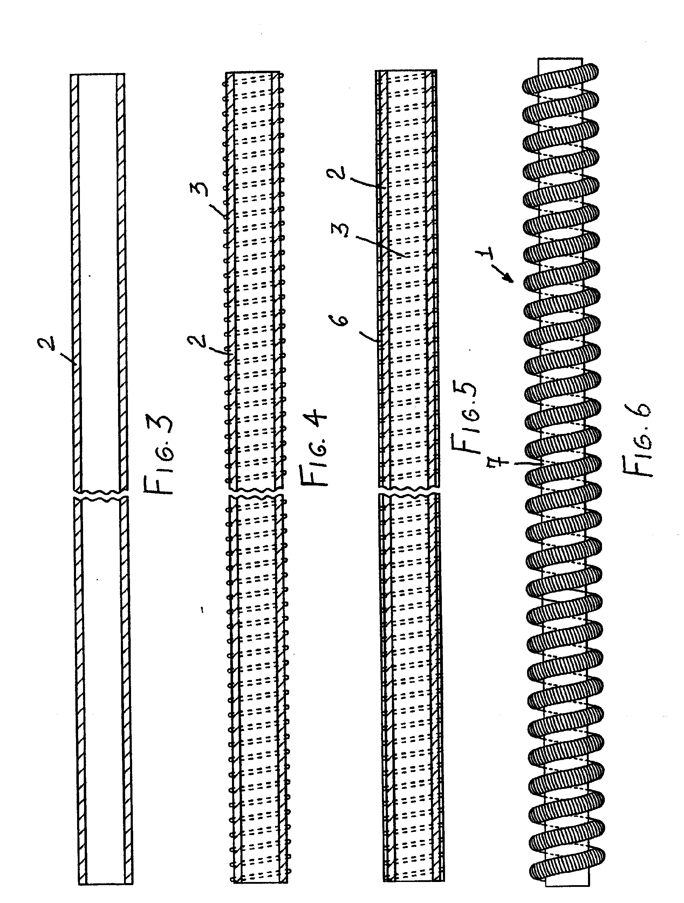

After having formed the tubular element 2, on said tubular element 2 is wound a metal spiral element 3, shown in figures 3, by using any suitable spiral element winding machine.

The method for making the coiled tube provides moreover a step of applying a further plastic coating (such as of nylon, polyurethane or other thermoforming materials), made by any prior extruding process and provided for application to the tubular element so as to coat the metal spiral arrangement and first tube.

At the end of this second coextruding process, a tube will be provided, comprising a tubular element 2 with a metal spiral element 3 and an outer coating 6.

The thus made tube has still a rectilinear configuration, and it is cut to a desired length or size.

Then, said tube, upon winding on a mandrel 7, is arranged in a heated oven for assuming, upon cooling, an end spiral configuration, and being disengaged from the forming mandrel.

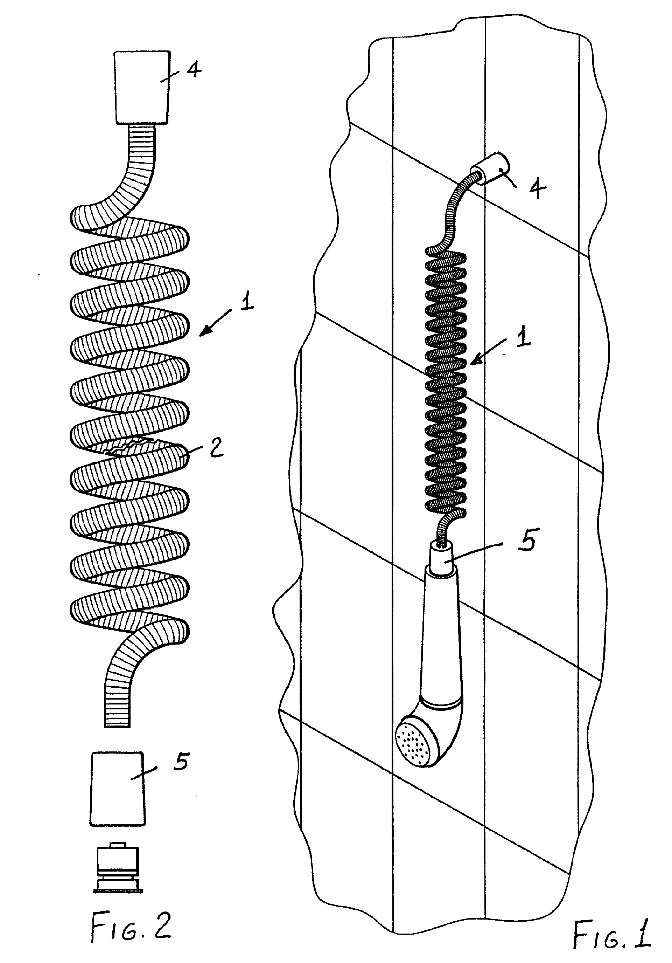

After the above disclosed operations, the article of manufacture 1 will assume the coiled or spiral configuration, as is clearly shown in figures 1 and 2.

The thus made coiled tube 1 can be then coupled to the shower by using mechanical fittings 4 and 5 or by overmolding and can be provided with specifically designed threaded ring nuts.

The spiral configuration of the coiled tube will provide said tube with a very reduced size: however, as required, the tube can be extended to a length of at least five-seven times its starting length.

In this connection it should be apparent that the elongation or extending ratio will be directly proportional to the diameter of the tube, its starting length and winding diameter.

From the above disclosure it should be apparent that the invention fully achieves the intended aim and objects.

In particular, a coiled tube or hose 1 has been provided, which is very strong and can resist against resilient stretching efforts without problems and without damaging components of the shower cabinets.

The invention, as disclosed, is susceptible to several modifications and variations, all of which will come within the scope of the invention.

Moreover, all of the constructional details can be replaced by other technically equivalent elements.

In practicing the invention, the used materials, as well as the contingent size and shapes, can be any, depending on requirements.

## Claims

1. A flexible and resiliently extensible coiled tube, **characterized in that** said tube comprises a plastics material tubular element (2), made by extruding without mandrel and made of nylon, polyurethane or other thermoforming materials, and being provided with a metal spiral element (3) in which is wound on said tubular element (2).

2. A flexible and resiliently extensible coiled tube, according to the preceding claim, **characterized in that** said tubular element (2) comprising a further plastics material coating layer (6) of nylon, polyurethane or other thermoforming materials, made by a conventional extruding process, and coating said metal spiral element (3) and first tubular element (2).

3. A flexible and resiliently extensible coiled tube, according to Claims 1 and 2, **characterized in that** said tubular element (2) thereon are arranged said metal spiral element (3) and outer plastics material coating element (6) has a rectilinear arrangement.

4. A flexible and resiliently extensible coiled tube, according to the preceding claims, **characterized in that** said tubular element is cut to a desired size and is spiral wound on a forming mandrel (7), for providing said tubular element with a coiled or spiraled end configuration.

5. A method for making a flexible and resiliently extensible coiled tube, according to one or more of the preceding claims, **characterized in that** said method comprises the step of providing a tubular element made of a plastics material, by an extruding process, and by using nylon, polyurethane or other thermoforming materials.

6. A method according to Claim 6, **characterized in that** said method further comprises the step of winding on said tubular element (2) a metal spiral element, by using a metal spiral element winding machine.

7. A method, according to one or more of the preceding claims, **characterized in that** said method comprises the step of performing a further coextruding by applying to said tubular element, coated by said spiral metal wire, a second plastic coating layer, preferably made of nylon, polyurethane or other thermoforming materials.

8. A method, according to one or more of the preceding claims, **characterized in that** said second coextruding step provides a coating on said tubular element including said spiral metal wire said coating comprising a plastics material layer.

9. A method for making a flexible and resiliently extensible coiled tube, according to one or more of the preceding claims, **characterized in that** said tube, comprising a plurality of layers, is wound on a forming mandrel and is heated in a heating oven.

10. A method for making a flexible and resiliently extensible coiled tube, according to one or more of the preceding claims, **characterized in that** said method further comprises the steps of removing said tube from said heating oven and disengaging said tube from said forming mandrel and coating said tube to provide said tube with a coiled configuration.
